# EUROPEAN PATENT APPLICATION

(11) **EP 4 838 374 A1**
(43) Date of publication of application: **11.11.2026**
(21) Application number: 25305639.4
(22) Date of filing: 05.05.2025
(51) Int. Cl.: G06F 16/23, G06F 16/27

(54) **CONSISTENT CHANGE DATA CAPTURES IN DISTRIBUTED DATABASES**

(71) Applicant: Dassault Systèmes, 78140 Vélizy-Villacoublay (FR)
(72) Inventor: LABBATE, Frédéric, 78946 Vélizy-Villacoublay (FR); SAHUT D'IZARN, Jean-Philippe, 78946 Vélizy-Villacoublay (FR); VALLET GLENISSON, Eric, 78946 Vélizy-Villacoublay (FR); TAUVERON--JALENQUES, Aimery, 78946 Vélizy-Villacoublay (FR)
(74) Representative: Bandpay & Greuter

(57) **Abstract**

The disclosure relates to a computer-implemented method for capturing data changes in a distributed multi-master ACID database with consistent read isolation and eventual consistency. The database comprises nodes for executing transactions, each node maintaining a respective logical clock for generating a logical timestamp for each executed transaction. The method comprises obtaining the database, the database comprising a data structure for storing the captured data changes. The method comprises, for each transaction executed by a node, and prior a commit of the executed transaction, logging one or more captured data changes, each captured data change comprising a logical timestamp of the executed transaction and one or more physical modifications, thereby storing in the data structure a partially causal ordered log of the one or more physical modifications of the executed transactions.

## Description

### TECHNICAL FIELD

The disclosure relates to the field of computer programs and systems, and more specifically to a computer-implemented method for capturing data changes in a distributed multi-master ACID database with consistent read isolation and eventual consistency.

### BACKGROUND

In-memory databases are purpose-built databases that rely primarily on memory (e.g. in Random Access Memory) for data storage, in contrast to databases that store data on disk or SSDs. Among such databases, RDF (Resource Description Framework) graph databases are of particular interest due to their great flexibility in data modeling and data storage.

A database is any collection of data (i.e., information) organized for search and retrieval. It is designed to handle large volume of data and allows for efficient storage, retrieval and manipulation. When stored on a memory, the database allows a rapid search and retrieval by a computer.

RDF graphs are a traditional data model used for the storage and the retrieval of these graphs. The RDF specification has been published by the World Wide Web Consortium (W3C) to represent information as graphs, see for example RDF 1.1 Concepts and Abstract Syntax published here: https://www.w3.org/TR/rdf11-concepts/.

The core structure of an RDF graph is an RDF triple consisting of a subject, a predicate and an object. A set of such RDF triples is called an RDF graph. An RDF graph may be visualized as a node and a directed-arc diagram, in which each triple is represented as a node-arc-node link. As an example, an RDF triple may have two nodes, which are the subject and the object and an arc connecting them, which is the predicate. A graph label can be added to a RDF triple to obtain an RDF quad. More information about RDF can be found here: https://www.w3.org/TR/rdf11-concepts/#data-model.

RDF applications (e.g., Computer-Aided Design, Computer-Aided Engineering, Product Lifecycle Management) usually require an important number of RDF quads to store and manipulate. RDF graphs have grown to billions of quads (e.g., Uniprot 100 billion of triples, Wikidata 17 billion of triples, 3DS SIEM up to 500 billion of triples), thus impacting on read and write performances. The total cost of ownership (TCO) of the storage can be also impacted. The TCO is the sum of all costs associated with owning and operating the storage over its entire lifecycle. This sum may include the initial costs, the implementation costs, operational costs and any end-of-life costs.

The data storage aspect is common to local or distributed database. A distributed database is a database in which data is stored across different physical locations, which can be on different computers or servers (i.e., the nodes) connected by a network. See, for example, https://en.wikipedia.org/wiki/Distributed_database.

A distributed database may comprise two layers: a compute layers and a storage layer. The compute layer and the storage layer may be separated to improve the scalability and the high availability of the distributed system.

Scalability is a property of the database to handle increasing workloads by adding resources, such as more computing power, physical nodes and the like. One definition for software systems specifies that this may be done by adding resources to the system. More about scalability is provided in https://en.wikipedia.org/wiki/Scalability.

High availability is a property of the database to ensure an agreed level of operational performance, usually uptime, for a higher than normal period. Therefore, high availability ensures that a database maintain an agreed level of operational performances, i.e. it remains accessible and operational even in the event of hardware failures, network issues, or other disruptions. More about high availability is provided in: https://en.wikipedia.org/wiki/High_availability.

Database systems can be divided into three categories: OLTP, OLAP and HTAP (see, e.g., https://en.wikipedia.org/wiki/Online_transaction_processing). "Online transaction processing (OLTP) is a type of database system used in transaction-oriented applications, such as many operational systems. Online refers to that such systems are expected to respond to user requests and process them in real-time (process transactions). [...] OLTP is typically contrasted to online analytical processing (OLAP), which is generally characterized by much more complex queries, in a smaller volume, for the purpose of business intelligence or reporting rather than to process transactions. Whereas OLTP systems process all kinds of queries (read, insert, update and delete), OLAP is generally optimized for read only and might not even support other kinds of queries." Lately, the term HTAP is used to create a hybrid of both (https://en.wikipedia.org/wiki/Hybrid_transactional/analytical_processing).

Some of RDF applications require an HTAP workload. In the HTAP workload, OLTP requests are executed on a native graph database and OLAP requests are executed on a analytics engine (e.g., Netvibes, https://www.3ds.com/fr/products/netvibes/3dexperience-netvibes) or on read replicas with dedicated data structures to have a different path for read intensive search queries, possibly on dedicated nodes. It is therefore important to provide consistent replicas of data for the OLAP workload, while maintaining scalability and high availability of the distributed database.

An analytics engine is a data structure that helps in organizing and retrieving information based on the meaning and relationships between data. An analytics engine leverages the principles of semantic indexing and graph theory to create a network of interconnected nodes (e.g., representing entities or concepts) and edges (e.g., representing relationships). An analytics engine is often called a downstream application, i.e., an analytics engine is a data structure used by a third party.

Transactions in distributed database obey ACID properties. ACID properties - ACID stands for Atomicity, Consistency, Isolation, Durability - is a set of properties of database transactions intended to guarantee data validity despite errors, power failures, and other mishaps. ACID properties make it possible, for example, to be able to start a transaction and during this transaction, all queries see the same version of the data, even if the data are updated concurrently in one or more partitions. For example, ACID properties are discussed here: https://en.wikipedia.org/wiki/ACID.

In the field of distributed databases, data modifications and data changes may need to be propagated to one or more downstream applications using change data capture (CDC) design patterns with or without an Extract-Transform-Load (ETL) process; see, e.g., https://en.wikipedia.org/wiki/Extract,_transform,_load.

CDC is a technique used to identify (i.e., capture) and track changes in data within a database. This technique enables the identification and capture of insertions, updates, and deletions, allowing these changes to be recorded and made available for further processing (e.g., downstream applications). CDC may be performed by a set of software design patterns used to identify and track the data that has changed (e.g., the "deltas"), so that action can be taken using the change data; see, e.g., https://en.wikipedia.org/wiki/Change_data_capture.

For example, consider an RDF distributed database consisting of a knowledge graph that is frequently updated, upon which it is required to create dashboard with analytics queries to give a synthetic view of the knowledge graph. An ETL process can be made to extract the relevant subset of data from the knowledge graph, transform it into secondary data suitable for the dashboard (e.g., tables) and then load this data into the dashboard. Once done, new modifications on the knowledge graph should be applied on the existing secondary data (e.g., a downstream application) instead of recomputing all from scratch. That is where having a CDC of the modifications made on the distributed database is useful.

Within this context, there is a need for an improved computer-implemented method for capturing data changes in a distributed multi-master ACID database with consistent read isolation and eventual consistency.

### SUMMARY

It is therefore provided a computer-implemented method for capturing data changes in a distributed multi-master ACID database with consistent read isolation and eventual consistency, and referred to as the "capturing method". The database comprises nodes for executing transactions, each node maintaining a respective logical clock for generating a logical timestamp for each executed transaction. The capturing method comprises obtaining the database, the database comprising a data structure for storing the captured data changes. The capturing method comprises, for each transaction executed by a node, and prior a commit of the executed transaction, logging one or more captured data changes, each captured data change comprising a logical timestamp of the executed transaction and one or more physical modifications, thereby storing in the data structure a partially causal ordered log of the one or more physical modifications of the executed transactions.

The capturing method may comprise one or more of the following:
- the generated logical timestamp for each executed transaction provides a partial causal order of the executed transactions;
- the generated logical timestamp for each executed transaction comprises:
   -- an unique identifier of the executed transaction, the unique identifier (i) indicating on which node of the database the transaction was executed and (ii) counting how many transactions already executed on that node including the executed transaction; and
   -- a vector timestamp of the executed transaction expressing a casual relation of the executed transaction from transactions executed by the nodes of the database, the vector timestamp having a component for each respective node of the database, each component counting how many transactions already executed on the respective node being causally related to the executed transaction;
- the counting increments at each transaction being executed;
- the one or more physical modifications comprise deterministic and not contextual operations;
- the database is an RDF graph database for storing RDF data, the deterministic and not contextual operations on a RDF data comprise adding and/or deleting RDF triples, respectively, to/from an RDF graph; and/or
- the database is a relational database, the deterministic and not contextual operations on the relational database comprise adding and/or deleting rows, respectively, to/from a table.

It is further provided a computer-implemented method for generating captured data changes according to the capturing method, and referred to as the "generating method". The generating method comprises obtaining the log of one or more physical modifications. The generating method comprises building a causal tree representing causal relations among the obtained one or more physical modifications of the partially causal ordered log, each node of the causal tree representing one or more physical modifications of the partially causal ordered log. The generating method comprises adding a convergent leaf relating one or more leaves of the causal tree, a convergent leaf being a child of the one or more leaves of the causal tree which leads to convergent physical modifications, the convergent physical modification being the physical modification resulting of the convergence of all paths in the causal tree.

The generating method may comprise one or more of the following:
- adding a convergent leaf further comprises:
   -- initializing a list of leaves of the causal tree;
   -- traversing each node of the causal tree according to the following rules:
      --- if the traversed node of the causal tree is a root of the causal tree, initializing a list of physical modifications and adding the respective one or more physical modifications to the list of physical modifications;
      --- if the traversed node of the causal tree is not a leaf of the causal tree, adding the respective one or more physical modifications to the list of physical modifications;
      --- if the traversed node of the causal tree is a leaf of the causal tree, adding the respective one or more physical modifications to the list physical modifications and adding the node of the causal tree to the list of leaves of the causal tree;
   -- outputting the list of leaves of the causal tree; and
   -- outputting the list of physical modifications; and/or
- compacting the outputted list of physical modifications, wherein compacting comprises removing operations whose composition results in no modification.

It is further provided a computer program comprising instructions which, when executed by a computer system, cause the computer to perform the capturing method and/or the generating method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method for capturing data changes;
- FIG. 2 shows a flowchart of an example of the method for generating captured data changes;
- FIG.s 3 to 8 illustrate the methods; and
- FIG. 9 shows an example of a system;

### DETAILED DESCRIPTION

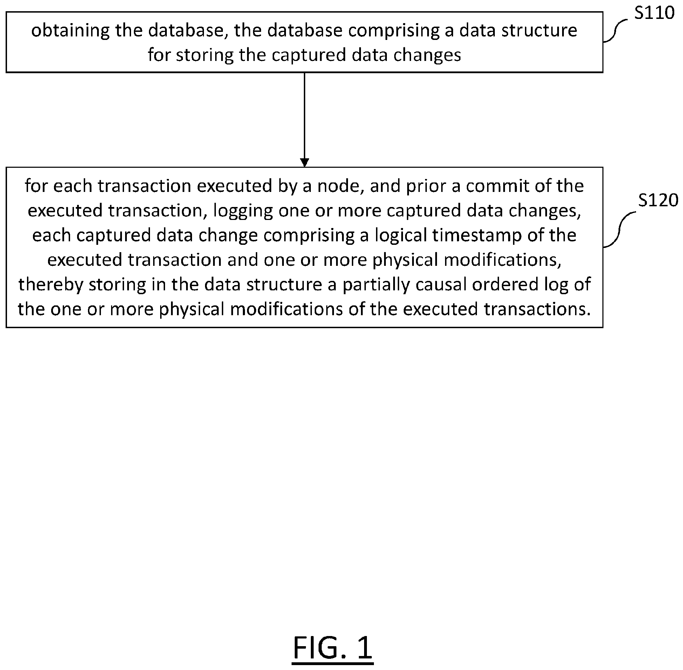

With reference to the flowchart of FIG. 1, it is proposed a computer-implemented method for capturing data changes in a distributed multi-master ACID database with consistent read isolation and eventual consistency, and hereafter called the "capturing method".

For the sake of explanations only, a general discussion of distributed databases is now provided. In a distributed database (e.g. a distributed ACID database), data is stored across different physical locations, which may be on different computers or servers, called nodes, connected by a network.

In a distributed multi-master database (e.g. the distributed multi-master database has ACID properties), multiple nodes may handle write operations independently. These nodes are called masters. Each master may capture data changes and may be responsible for propagating the data changes to other masters and/or to other nodes of the distributed database.

In a distributed multi-master database (e.g. the distributed multi-master database has ACID properties), capturing data changes may comprise identifying and recording (e.g., logging) one or more physical modifications made to the data at each master node. This ensures that all nodes remain synchronized and consistent across the distributed database. Indeed, the distributed multi-master database of the present disclosure guarantees ACID properties with consistent read isolation and eventual consistency. Consistent read isolation in a distributed multi-master database ensures that read operations return a consistent view of the data, even when multiple nodes are handling concurrent write operations. This read isolation level maintains data integrity and consistency across the distributed database. Eventual consistency is a type of data consistency used in distributed multi-master databases where updates to the database eventually propagate to all nodes, ensuring that all copies of the data converge to the same state over time.

The distributed multi-master ACID database of the present disclosure (hereafter referred to it as "the database" or "the database of the present disclosure") comprises nodes for executing transactions. A transaction is a sequence of operations performed as a single logical unit of work. These operations may adhere to one or more of the ACID properties to ensure data integrity and reliability across multiple nodes of the distributed database; the term transaction is well known in the art and more about transactions can be read, e.g. here https://en.wikipedia.org/wiki/Distributed_transaction.

Each node maintains a respective logical clock for generating a logical timestamp for each executed transaction. A logical clock amounts to a mechanism used to order transactions and capture the chronological and causal relationships between them. Unlike physical clocks, which measure real-world time and need be synchronized across nodes, a logical clock generates a logical timestamp for each executed transaction. In other words, a logical clock can establish a consistent partially causal ordering of executed transactions across the database.

The capturing method comprises obtaining the database, e.g. the computer system running the database can store the database in its memory; for instance in the RAM of the computer system. The database comprises a data structure for storing the captured data changes.

The capturing method comprises, for each transaction executed by a node, and prior a commit of the executed transaction, logging one or more captured data changes. As known in the art, a commit is an operation that makes all changes of a transaction permanent in the database. Each captured data change comprises a logical timestamp of the executed transaction and one or more physical modifications. The logical timestamp provides both the ordering and the causal dependencies among the executed transactions, thereby allowing the method to store in the data structure a partially causal ordered log of the one or more physical modifications of the executed transactions. A partially causal ordered log is a log system where events are recorded with a partial causal order, meaning that only causally related events are ordered while concurrent events may appear in any order; the causal ordering ensures that if one event causes another, the first event appears before the second in the log.

Such a computer-implemented method provides an improved solution for capturing data changes in a distributed multi-master ACID database with consistent read isolation and eventual consistency, the latter being a consequence of the causal dependences indicated in the logical timestamps.

Notably, the capturing method amounts to a mechanism for storing, in the data structure of the database, a partially causal ordered log of the one or more physical modifications of the executed transactions. Such a partially causal ordered log of the one or more physical modifications of the executed transactions ensures that said executed transactions are causally related to each other, i.e., seen by the nodes in a partial causal order. Transactions, and the respective one or more physical modifications, are considered causally related if one transaction influences or depends on another one. Unlike a total causal order where every transaction is compared to every other transaction having a causal relationship, a partial causal order allows a subset of transactions to be unrelated to the other transactions (e.g., for being processed concurrently), thus enabling the nodes to process them independently. Indeed, the partially causal order supports multiple concurrent modifications by different nodes of the distributed database without waiting for a total causal order. Otherwise said, the partial causal order enables a certain level of data isolation and helps maintain data consistency across the distributed database; said otherwise, this approach helps maintain consistency without enforcing a strict global order, reducing unnecessary synchronization and improving system efficiency in distributed environments.

The capturing method comprises an ACID database with a multi-master architecture. Such multi-master architecture increases scalability and high availability of the distributed ACID database, and allows for distributed access to data. In other words, the multi-master architecture allows write operations on multiple nodes and, if one master is down, other masters can continue to update the ACID database.

The capturing method comprises a database compliant with ACID properties, consistent read isolation and eventual consistency. This set of properties is sufficient for having data visibility, data integrity, data consistency and data convergence during the execution of multiple transactions across the distributed database. In particular, the database does not require serializable isolation, which is the strongest level of isolation and deemed too restrictive because it affects write performance.

The capturing method comprises logging one or more captured data changes prior a commit of the executed transaction. The logging is performed prior the commit is executed as the commit of the executed transaction makes the one or more physical modifications of the executed transaction available (e.g., visible) to other transactions: indeed, the commit may be refused (e.g., abort) if the physical modifications violate one or more consistency rules or if a conflict occurs with another concurrent transaction (e.g. both concurrent transactions try to delete the same triple). The commit of a transaction can be visible by another node (meaning, its corresponding modifications are seen by another node) only when the causal relationships (i.e., the causal dependencies) of this transaction are seen by the another node. Therefore, the commit enables each executed transaction being an ACID transaction.

The capturing method also comprises logical clock and logical timestamps, one for each node of the distributed database. Thus, the capturing method does not have to face issues related to physical clock drift and synchronization errors. Moreover, logical timestamps allow to implement, in the data structure of the database, a partially causal ordered log of the one or more physical modifications of the executed transactions. In different words, the logical clock of a respective node amounts to the respective node's view of the distributed database, i.e., provides a local counter of "events" (e.g., a counter of executed transactions and operations) performed in the respective node. The distributed database, therefore, may utilize the logical clocks and the generated logical timestamps to obtain the partially causal ordered log of the one or more physical modifications of the executed transactions, because the distributed database captures the last known logical timestamps of all other nodes at the beginning of the executed transaction.

In examples, the generated logical timestamp for each executed transaction may provide a partial causal order of the executed transactions. In other words, the generated logical timestamps provide both the ordering and the causal dependencies among the executed transactions.

The generated logical timestamp for each executed transaction may comprise an unique identifier of the executed transaction. The unique identifier may indicate on which node of the database the transaction was executed and may count how many transactions already executed on that node including the executed transaction.

In examples, the unique identifier may be represented by a pair of data, e.g., [*Nᵢ*, *n*], wherein *Nᵢ* may indicate the identifier of the node in the distributed database (e.g., *Nᵢ = 1, 2, 3, ... N,* where *N* represents the total number of nodes in the distributed database) and *n* may indicate the number of transactions executed on the node *Nᵢ*; thus *n* may be a counter of the node, meaning that the numerical value of *n* may represent the transactions executed on the node.

In examples, the unique identifier may count the executed transactions by incrementing (i.e., increasing) the counting at each transaction being executed on the respective node. The counting may be performed at the beginning of the executed transaction. The counting may be sequential, that is the counting may comprise incrementing values by an unit (e.g., from 1 to 2, from 2 to 3, etc.). Alternatively or optionally, the counting may comprise incrementing values by a fixed constant amount (e.g., 10 or 150 or 384). The latter implementation can manage concurrent write transactions and ensure uniqueness of the generated logical timestamp.

The generated logical timestamp for each executed transaction may comprise a vector timestamp of the executed transaction. The vector timestamp may express a causal relation of the executed transaction from transactions executed by the nodes of the database. The vector timestamp may have a component for each respective node of the database. Each component may count how many transactions already executed on the respective node are causally related to the executed transaction. The vector timestamp may be generated at the beginning of the executed transaction.

In examples, the vector timestamp may be represented by an n-tuple of data, e.g., [*n*₁, *n*₂, *n*₃, ... , *n_{N}*], where *n*₁ may represent the number of transactions executed on the first node (i.e., the node labelled by *Nᵢ* = 1) being causally related to the executed transaction, *n*₂ may represent the number of transactions executed on the second node (i.e., the node labelled by *Nᵢ* = 2) being causally related to the executed transaction, etc.

The vector timestamp, thus, provides an explicit causal dependency between the executed transaction on a given node and transactions executed on some other nodes of the distributed database, being causally related to the executed transaction.

For the sake of explanation, one may consider an example of distributed database with two nodes: a first node A and a second node B. The initial state of the vector timestamp of the first node A is [0, 0] and the initial state of the vector timestamp of the second node B is [0, 0]. The first component of the vector timestamp refers to the first node A and the second component of the vector timestamp refers to the second node B. If the first node A executes a transaction, the vector timestamp of the first node A increments to [1, 0]. If the second node B executes a transaction, concurrently to the first node A, the vector timestamp of the first node B increments to [0, 1]. The two concurrent transactions are not causally related to each other. However, if the second node B commits the executed transaction, the transaction executed by the second node B may become visible to the first node A (i.e., the first node A becomes "aware" of the concurrent transaction executed by the second node B), the vector timestamp of the first node A reads [1, 1].

Two vector timestamps may be compared by checking the two vector timestamps component-wise, i.e., by comparing each component of the first vector timestamp with the corresponding component of the second vector timestamp. Consider, for the sake of an example, a distributed database with three nodes. If each component of the first vector timestamp is the same of the corresponding component of the second vector timestamp, then the two vector timestamps are the same, e.g., [0, 3, 1] and [0, 3, 1]. If there exists at least one component of the first vector timestamp less and none of the components greater than the corresponding component of the second vector timestamp, then the first vector timestamps precedes the second vector timestamp, e.g., [2, 4, 1] precedes [4, 5, 2]. If there exist some components of the first vector timestamp less or equal to some components of the second vector timestamp, and some components of the first vector timestamp greater than some components of the second vector timestamp, then the two vector timestamps are concurrent, e.g., [3, 5, 1] and [0, 2, 2].

In examples, the one or more physical modifications, for each executed transaction, may comprise deterministic operations and not contextual operations. A deterministic operation is a type of operation that produces the same result every time it is executed with the same input, regardless of the timing or order of execution, therefore ensuring consistency in the database, where multiple replicas may be updated concurrently. A not contextual operation is an operation that does not depend on the specific state or context of the data at the time it is executed. This means that the outcome of the operation remains the same regardless of the current state of the database or the order in which operations are applied.

Deterministic and not contextual operations ensure convergence of the distributed database across all nodes.

In examples where the one or more physical modifications comprise deterministic operations and not contextual operations, the database may be an RDF graph database for storing RDF data. The RDF graph database complies with ACID properties, consistent read isolation and eventual consistency. An RDF graph database is a type of database that organizes data in RDF triples, which consist of a subject, a predicate and an object. These triples form a directed graph, where nodes represent subjects and objects, and edges represent predicates. SPARQL language is commonly used to manage and query data in RDF graph databases. The deterministic operations and not contextual operations on the RDF graph database may comprise adding RDF triples to an RDF graph and/or deleting RDF triples from an RDF graph.

Alternatively, still in these examples where the one or more physical modifications comprise deterministic operations and not contextual operations, the database may be a relational database. The relational database complies with ACID properties, consistent read isolation and eventual consistency. A relational database is a type of database that organizes data into tables, which consist of rows and columns. Each table represents a different entity, and the relationships between these entities are defined through keys. Keys are unique identifiers, such as primary keys, used to establish relationships between tables. Structured Query Language (SQL) language is commonly used to manage and query data in relational databases. The deterministic operations and not contextual operations on the relational database may comprise adding rows to a table and/or deleting rows from a table.

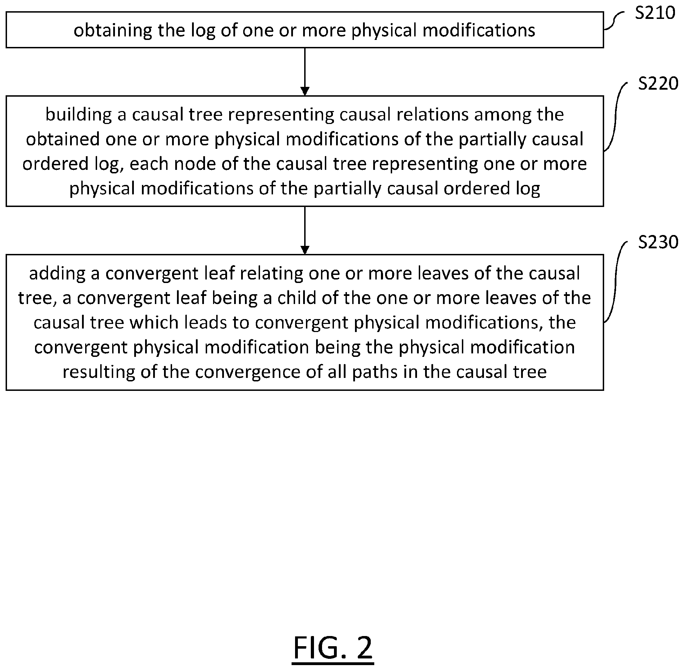

With reference to the flowchart of FIG. 2, it is provided a computer-implemented method for generating captured data changes according to the capturing method. Such a method is hereafter called the "generating method".

The generating method comprises obtaining the log of one or more physical modifications. In other words, the generating method comprises obtaining the partially causal ordered log of the one or more physical modifications of the executed transactions. The log tracks data changes and operations performed on the database. The log is computed (obtained) in accordance with anyone of one or more examples of the capturing method.

The generating method comprises building a causal tree. The causal tree represents causal relations among the obtained one or more physical modifications of the partially causal ordered log. Each node of the causal tree represents one or more physical modifications of the partially causal ordered log. The causal tree may be a connected acyclic undirected graph.

The generating method comprises adding a convergent leaf relating one or more leaves of the causal tree. A convergent leaf is a child of the one of more leaves of the causal tree. In other words, a convergent leaf in a causal tree is a terminal node (i.e., a leaf) where multiple paths converge, i.e., lead to the same outcome or effect. A convergent leaf leads to convergent physical modifications. A convergent physical modification is the physical modification resulting of the convergence of all paths in the causal tree.

Such a computer-implemented method provides an improved solution for generating captured data changes (CDC). Moreover, as CDC are employed in different downstream applications, e.g., data replication, data warehousing and real-time analytics, the generating method forms an improved solutions for platforms performing data replication, data warehousing and real-time analytics.

Notably, the generating method comprises the partially causally ordered log of one or more physical modifications. The log ensures data integrity and helps restore a last consistent state of the database in case of failure. The log is used to synchronize the database and a secondary database (e.g., downstream applications). Moreover, the log targets and captures modified data (e.g., incremental changes) in the distributed database, thus avoid scanning the entire distributed database to obtain the captured data changes and therefore reducing the workload and processing cost.

The generating method also comprises a causal tree. The causal tree of the disclosure may be a directed acyclic graph (DAG), e.g., a directed tree as known in graph theory; see, e.g., https://en.wikipedia.org/wiki/Tree_(graph_theory). A DAG comprises vertices (or nodes) and edges (or arcs), with each edge directed from one vertex to another vertex, such that there is no cycle (i.e., closed loop) following the directions indicated by the directed edges.

The representation of causal relations among the obtained one or more modifications in terms of DAG allows for efficient traversal and searching algorithm, such as depth-first search or breadth-first search, which can quickly retrieve data. Moreover, the directness simplifies the management of causal relations because there each directed edge between two connected vertices represents a causal dependence (e.g., a causal relation) between the two connected vertices; the acyclicity simplifies the representation of causal dependencies because the causal tree does not show any cycle or closed loop, thus resulting in better performances during the execution of the claimed method.

Examples of the generating method are now discussed, being understood that all or part of these examples may be combined.

In examples, the adding of a converge leaf may further comprise initializing a list of leaves of the causal tree. Initializing a list of leaves may comprise deleting a current content of the list of leaves, i.e., deleting the list of leaves. The initialized list may be an empty list.

The adding of a convergence leaf may further comprise traversing each node of the causal tree according to the following rules. The traversing may be a depth-first traversing or a breadth-first traversing, i.e., the traversing may be implemented by a depth-first search algorithm or a breadth-first search algorithm. The traversing may comprise starting from each root of the causal tree. In other words, the traversing may be performed root-wise, i.e., for each root of the causal tree, the traversing may pass through nodes till the terminal node.

In examples, the traversing may be performed according to the following rules.

If the traversed node of the causal tree is a root of the causal tree, then the generating method may comprise initializing a list of physical modifications and adding the respective one or more physical modifications to the list of physical modifications. A root of the causal tree is a starting point or a topmost node of the causal tree. From a root, branches extend downward to other causally related nodes. Initializing a list of physical modifications may comprise deleting a current content of the list of physical modifications, i.e., deleting the list of previous physical modifications stored in said list.

If the traversed node of the causal tree is not a leaf of the causal tree, then the generating method may comprise adding the respective one or more physical modifications to the list of physical modifications. In other words, if the traversed node of the causal tree is not a terminal node of the causal tree, then the method may log the respective one or more physical modifications to the list of physical modifications. In yet other words, by traversing each node, the generating method may register, for each node that is not a terminal node, the respective one or more physical modifications in the list of physical modifications.

If the traversed node of the causal tree is a leaf of the causal tree, then the generating method may comprise adding the respective one or more physical modifications to the list of physical modifications and adding the traversed node of the causal tree to the list of leaves of the causal tree.

In examples, the adding of a convergence leaf may further comprise outputting the list of leaves of the causal tree and outputting the list of physical modifications.

In examples, the outputted list of leaves may comprise one or more leaves of the causal tree. The outputted list of leaves may be a combination (e.g., a concatenation) of one or more leaves, each generated from the respective traversing from each root.

In examples, the outputted list of physical modifications may be a combination (e.g., a concatenation) of one or more physical modifications, each obtained from the respective traversed node. If there is only one entry (i.e., one leaf) in the outputted list of leaves, then the outputted list of physical modifications may comprise the one or more physical modifications associated with the traversing leading to the said entry (i.e., respective to the one leaf listed in the outputted list of leaves). If there are more than one entry in the outputted list of leaves, then the outputted list of physical modifications may comprise the one or more physical modifications respective to each leaf listed in the outputted list of leaves.

In examples, the generating method may comprise compacting the outputted list of physical modifications. The compacting may comprise removing operations whose composition results in no modification, i.e., removing operations that cancel each other. The compacting may be performed on a partial list of physical modification (i.e., after having traversed each node) and/or on the outputted list of physical modifications (i.e., after having traversed all nodes, leaves included). The compacting amounts to a simplification of the outputted list of physical modifications, by reducing the number of operations to be performed that cancel each other, such as adding and removing the same row and/or adding and removing the same triple.

In examples, the outputted list of physical modifications may comprise the list of captured data changes to be processed by a downstream application without requiring strict serialization of the executed transactions. The outputted list of physical modifications may be stored in a JSON file before being processed by a downstream application.

In examples, the outputted list of physical modifications may be fully or partially locked while being consumed (e.g., processed) by a downstream application, for example by reading the outputted list of physical modifications with a "select for update".

In examples, the outputted list of physical modifications may be fully or partially marked as consumed (e.g., read) after being processed by a downstream application. Being marked as consumed may be compliant with ACID properties. This option saves time and resources by avoiding that the full outputted list of physical modifications be read each time the outputted list of physical modifications is sent and processed by a downstream application.

In examples, the outputted list of physical modifications may be stored in a durable storage before the one or more physical modifications are marked as consumed. This option may preserve the CDC over time and re-send the CDC to the downstream application in case of failure, such as a network error, a downstream application crushed, the node where the outputted list of physical modifications was created crashed.

The capturing and generating methods of the present disclosure are computer-implemented. This means that steps (or substantially all the steps) of the methods are executed by at least one computer, or any system alike. Thus, steps of the methods are performed by the computer, possibly fully automatically, or, semiautomatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory, the memory having recorded thereon a computer program comprising instructions for performing the method. The memory may also store a database. The memory is any hardware adapted for such storage, possibly comprising several physical distinct parts (e.g. one for the program, and possibly one for the database).

An example of implementation of the present disclosure is now discussed. This example of implementation comprises a combination of examples discussed hereinabove, being understood that any implementation of the present disclosure can rely on one or more of the discussed examples.

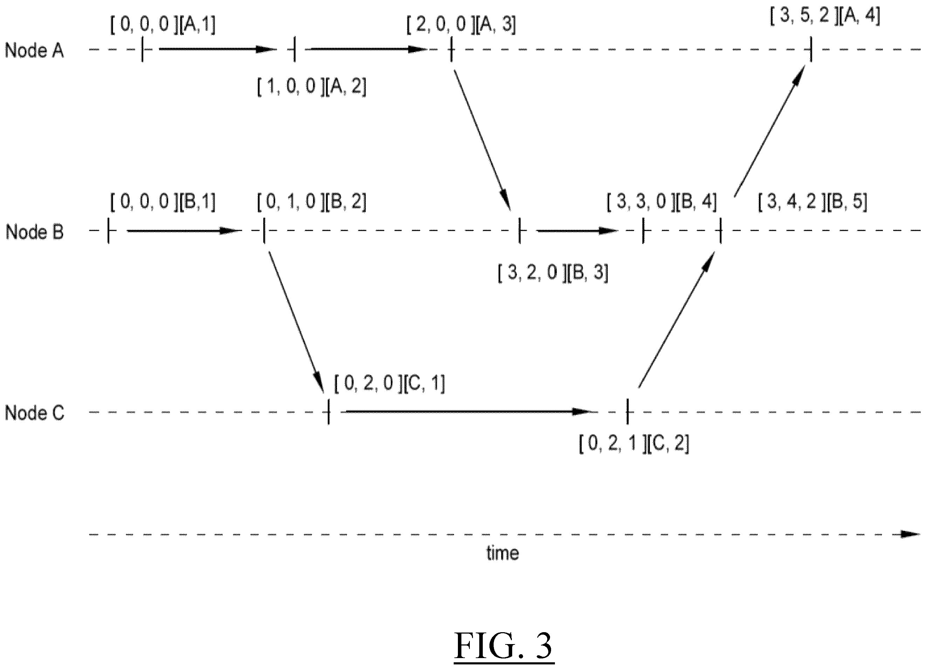

With reference to FIG. 3, it is shown an example of diagrammatic representation of a snapshot of the distributed database according to the capturing method.

Each node in the distributed multi-master ACID database may have a unique identifier, represented by a pair of data. For the sake of this example, consider that a first node is identified by [*A*, *n_{A}*], where A is the identifier of the node and *n_{A}* counts the number of transactions of A, a second node is identified by [*B*, *n_{B}*], where B is the identifier of the node and *n_{B}* counts the number of transactions of B, and a third node is identified by [*C*, *n_{C}*] , where C is the identifier of the node and *n_{C}* counts the number of transactions of C.

Each node maintains a respective logical clock for generating a logical timestamp for each executed transaction. The logical clock may be a Lamport clock or a vector clock. A Lamport clock is a logical clock mechanism used in distributed databases to determine the ordering (e.g., partial or total ordering) of events without relying on synchronized physical clocks. It assigns a unique timestamp to each event (e.g., an executed transaction), ensuring that if one event causally influences another, the first event will have an earlier timestamp (i.e., the two event are causally related to each other). A vector clock is a logical clock mechanism used in distributed databases to determine the partial ordering of events; a vector clock detects and preserves causality. It improves Lamport clocks by providing a more comprehensive way to track the causal relationships between events across multiple processes. In other words, a vector clock may track the unique identifier of a node and the last known other events from that said node.

When a transaction begins (e.g., at T_begin), the respective logical clock may generate a logical timestamp of the executed transaction. Each logical timestamp may be, thus, associated with the executed transaction. The transaction executes as if all reads take place at the beginning of the transaction.

Between the beginning and the commit of the executed transaction, no physical modification of the executed transaction should be modified by other transactions.

When a transaction is committed (e.g., at T_commit), the node may increment the respective counter in the respective unique identifier. The commit of an executed transaction may make the one or more physical modifications available to other transactions. The role of the commit is to be put in regard of ACID transaction. The one or more physical modifications should be applied before committing the transaction, so that either the one or more physical modifications and the log of the one or more physical modifications are applied, or neither of them are done.

Still with reference to FIG. 3, the vertical symbol | represents a commit of a transaction and the arrow represents a transaction.

In a first time, the unique identifier of the first node A is indicated by the pair of data [A, 1], representing that the first node A counts one commit (i.e., the first vertical symbol in the first line). This commit does not have any causal dependencies; the vector timestamp of the first node A associated to the commit [A, 1] is [0, 0, 0], where the first component refers to transactions on the node A, the second component refers to transactions on node B and the third component refers to transactions on node C. In a second time, the unique identifier of the first node A is indicated by the pair of data [A, 2], representing that the first node A counts two commits. The second commit has a causal dependency from the first commit of the first node A; the vector timestamp of the first node A associated to the commit [A, 2] is thus [1, 0, 0].

In the first time, the unique identifier of the second node B is indicated by the pair of data [B, 1], representing that the second node B counts one commit (i.e., the first vertical symbol in the second line). This commit does not have any causal dependencies; the vector timestamp of the second node A associated to the commit

[B, 1] is [0, 0, 0]. Thus, [0, 0, 0][A, 1] and [0, 0, 0][B, 1] are not causally related to each other and both are concurrent to each other. In a second time, the unique identifier of the second node B is indicated by the pair of data [B, 2], representing that the second node B counts two commits. The second commit has a causal dependency from the first commit of the second node B; the vector timestamp of the second node B associated to the commit [B, 2] is thus [0, 1, 0]. Thus, [1, 0, 0][A, 2] and [0, 1, 0][B, 2] are not causally related to each other and both are concurrent to each other.

In the meanwhile, the unique identifier of the third node C is indicated by the pair of data [C, 1], representing that the third node C counts one commit. This commit has a causal dependency from the first commit and the second commit of the second node B; the vector timestamp of the third node C associated to the commit [C, 1] is thus [0, 2, 0]. Thus, [0, 2, 0][C, 1] depends causally by [0, 1, 0][B, 2] and [0, 0, 0][B, 1], meaning [0, 0, 0][B, 1] caused [0, 1, 0][B, 2] and [0, 1, 0][B, 2] caused [0, 2, 0][C, 1].

The distributed multi-master ACID database complies with consistent read isolation, meaning that the database is compliant with an isolation level at least equal to consistent read. This feature amounts to the following set of properties:
- P1: Causal consistency. In a distributed database compliant with causal consistency, operations are observed in a causally consistent order, i.e., causes precede effects. In other words, a transaction is not visible on a node until all its causal dependencies, expressed by the respective vector timestamp at a given time, are visible to the other nodes of the distributed database;
- P2: Every snapshot of the distributed database obeys consistency rules. A consistency rule guarantees that all nodes reflect the same state of the distributed database and a transaction brings the distributed database from one consistent state to another consistent state. The consistency rules may include, besides the above-mentioned causal consistency, eventual consistency ensuring that, given enough time, all nodes converge to the same state.
- P3: Convergence. This amounts to the feature that all nodes of the distributed database eventually reach a consistent state of the distributed database, ensuring that all copies of the data are the same across the distributed database. In other words, all nodes eventually agree provided operations are deterministic and not contextual. Convergence may allow certain anomalies, such as write skew in consistent read level where two concurrent transactions read overlapping sets of data and then proceed to write to disjoint sets of data based on those reads.
- P4: Snapshots may be stale, meaning that a snapshot may become outdated or may no longer be needed. This is a consequence of multi-master architecture with consistent read isolation level in a distributed database, especially with multi-version concurrency control (MVCC), e.g., with snapshot isolation.

The generating method comprises obtaining the log of one or more physical modifications. The log of one or more physical modifications, associated to each transaction, may be kept in a dedicated table along with the node executing the transaction, the unique identifier of the executed transaction, the vector timestamp of the executed transaction, and the one or more physical modifications performed by the executed transaction. The generating method comprises building a causal tree representing causal relations among the obtained one or more physical modifications. The building of the causal tree may comprise applying (i.e., using) properties P1 to P4.

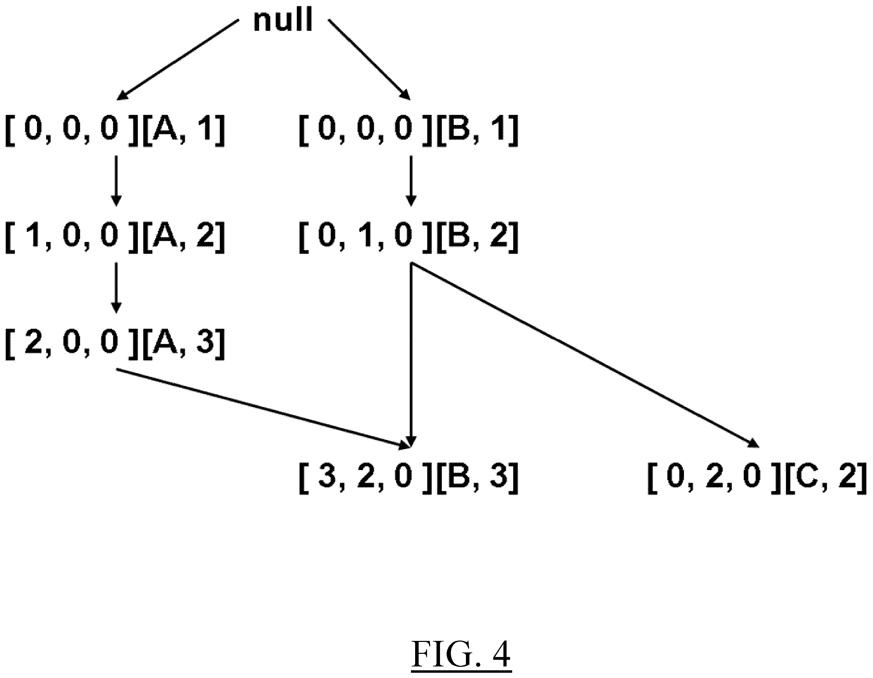

With reference to FIG. 4, it shown an example of causal tree according to the generating method.

The casual tree of FIG. 4 shows concurrent events, notably the pair [0, 0, 0][A, 1] and [0, 0, 0][B, 1], and the pair [1, 0, 0][A, 2] and [0, 1, 0][B, 2]. Concurrent events may be allowed by properties P3 and P4. Nevertheless, because of causal consistency P1 and the guarantee of eventual consistency P2, the generating method comprises adding a convergent leaf. The convergent leaf is a child of the one or more leaves of the causal tree. The convergent leaf may represent the convergence of all nodes in the distributed database. The existence of the convergent leaf may be ensured by property P3 above. Moreover, properties P1 and P2 may guarantee causal consistency and eventual consistency, possibly allowing anomalies (e.g. write skew). The generating method, thereby, results in a log of one or more physical modifications, such as adding RDF triples to an RDF graph and/or deleting RDF triples from an RDF graph, by traversing the causal tree. The log of one or more physical modifications may be used as a CDC for downstream applications, for example, for incremental view maintenance or to be sent to a secondary database, e.g., an analytics database for business intelligence or real-time data analysis.

As discussed earlier, each node of the distributed database, that executes a transaction, maintains a respective logical clock for generating a logical timestamp for each executed transaction. The generated logical timestamp for each executed transaction may register all known states of the other nodes of the distributed database. A state of the distributed database may represent a snapshot of the distributed database known at the time when the transaction begins, which is ACID and eventually consistent among the nodes.

A write transaction may perform one or more physical modifications. The CDC of all the physical modifications may not be available at once. In other words, a global log of all the physical modifications may not be available. However a single transaction, executed on a node, may have a log of the respective one or more physical modifications, along with the respective commit and the respective generated logical timestamps (i.e., the respective logical timestamps of all the other nodes known on the node at the beginning of the executed transaction) indicating the causal dependencies. Therefore, the capturing method stores in a dedicated data structure (for example a SQL table or a specific RDF graph), a partially causal order log of the one or more modifications along with the node identifier, the commit identifier and the generated logical timestamp. In examples, each row of a table may store a respective captured data change comprising the node identifier, the commit identifier, the generated logical timestamp and the one or more physical modifications of the executed transaction. The visibility of the dedicated data structure may be the same as any other data structure: ACID with consistent read isolation and eventual consistency.

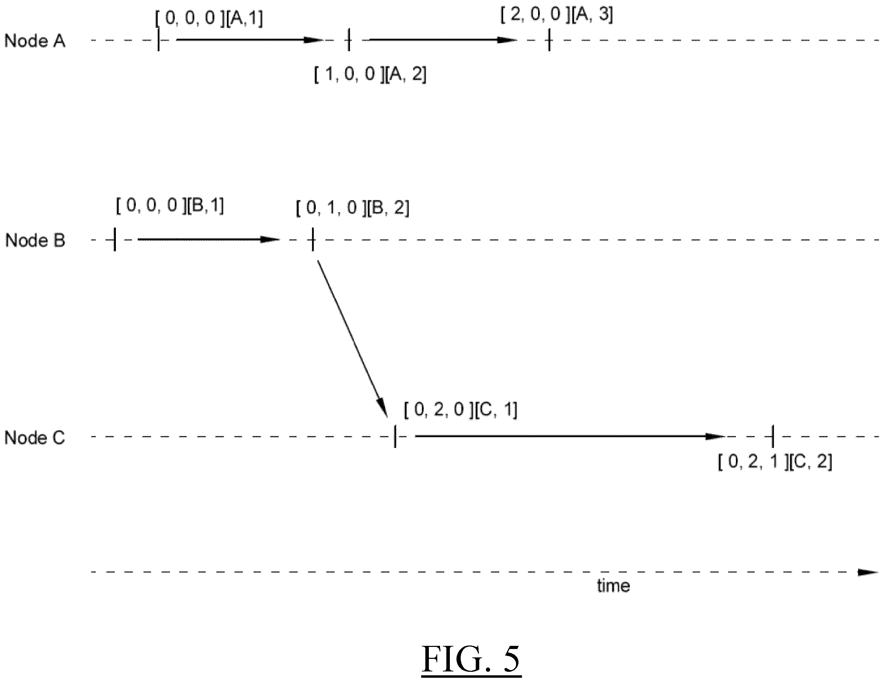

With reference to FIG. 5, it is shown an example of eventual consistency in a distributed database.

In examples, the distributed database may be a relational database or an RDF graph database. The following example of eventual consistency is provided in case the distributed database is a relational database.

The generating method may comprise inputting a table, called log table. Each row of the inputted log table may comprise: the node executing a transaction, the unique identifier of the executed transaction, the vector timestamp of the executed transaction, and the one or more physical modifications performed by the executed transaction.

FIG. 5 shows a distributed database according to the capturing method with three nodes: a first node A, a second node B, and a third node C. The capturing method may start with an empty log table T and progressively stores in the log table T a partially causal ordered log of the one or more physical modification.

On the first node A, there are three commits:
- Commit [A, 1] depends on [0, 0, 0]: add row r1 in T;
- Commit [A, 2] depends on [1, 0, 0]: add row r2 in T;
- Commit [A, 3] depends on [2, 0, 0]: delete all rows in T.

On the second node B, there are two commits:
- Commit [B, 1] depends on [0, 0, 0]: add row r3 and r4 in T;
- Commit [B, 2] depends on [0, 1, 0]: delete r3 in T.

On the third node C, there are two commits:
- Commit [C, 1] depends on [0, 2, 0]: add r5 in T, delete r4 in T;
- Commit [C, 2] depends on [0, 2, 1]: add r6 in T.

This log table shows that, during a limited time frame, a read transaction would see no rows in T if started on the first node A; the read transaction would see only r4 if started on the second node B; the read transaction would see r5 and r6 if started on the third node C. In other words, the three nodes of the distributed database are not yet consistent with each other.

Eventual consistency requires that all operations exchanged between nodes are not contextual. Commit [A, 3] depends on the vector timestamp [2, 0, 0], i.e., it depends on the commits [A, 1] and [A, 2]. Commit [A, 3] does not send "delete all rows in T" to all nodes, but commit [A, 3] deletes all rows that are visible, by the first node A, at this time of the commit of the transaction, i.e., "delete rows r1 and r2 in T". This is generally called physical logging (wherein changes are actually made) in contrast to logical logging (which are high-level operations).

Eventual consistency with consistent read may be guaranteed by the commit and visibility algorithms of the distributed database.

Eventual consistency is reached, in the example of FIG. 5, as follows.

Commit [C, 1] depends on the vector timestamp [0, 2, 0], i.e., it depends on the commits [B, 1] and [B, 2]. If the commit [C, 1] arrives at the first node A before the commit [B, 2] (from which [C, 1] causally depends), then the first node A will put the commit [C, 1] into a dependent transaction queue, meaning that it will not make the commit [C, 1] visible yet. Only after the commit [B, 2] is made visible on the first node A, then the first node A will remove commit [C, 1] from the dependent transaction queue and make it visible. Thus, when the first node A makes the commit [C, 2] visible, it will add r5 and r6 in T. Similarly, when the second node B makes [C, 2] visible, it will also add r5 and r6 in T. Thus, the three nodes have converged to the same state of the distributed database. Optionally, the outputted list of one or more physical modifications may be compacted to limit the storage cost.

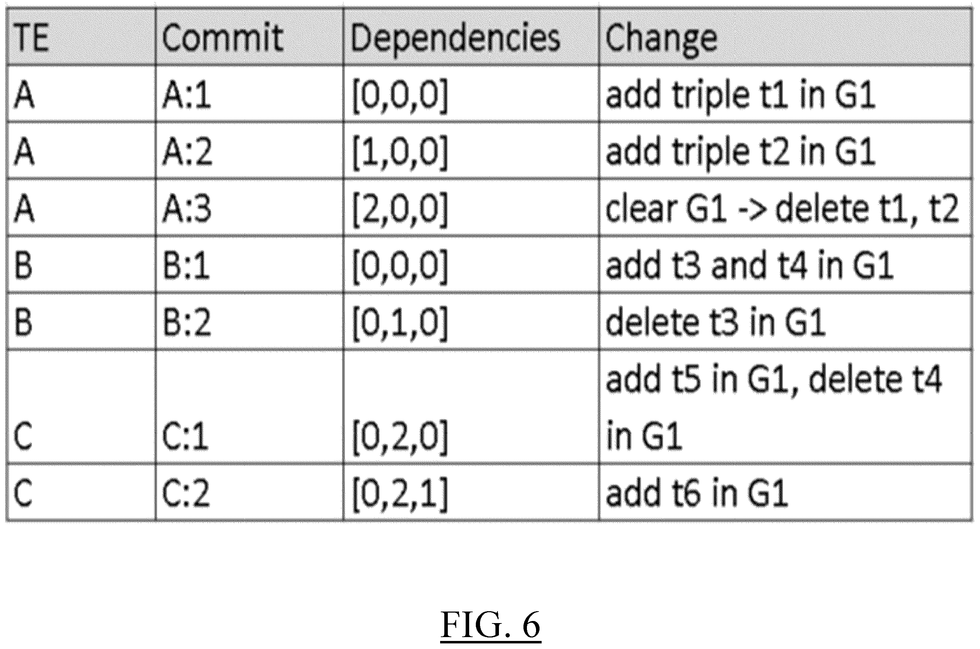

FIG. 6 shows an example of a log of physical modifications in case the distributed database is an RDF graph database. This log of physical modifications is an example of a partially causal ordered log of the one or more physical modifications stored in the data structure by the capturing method.

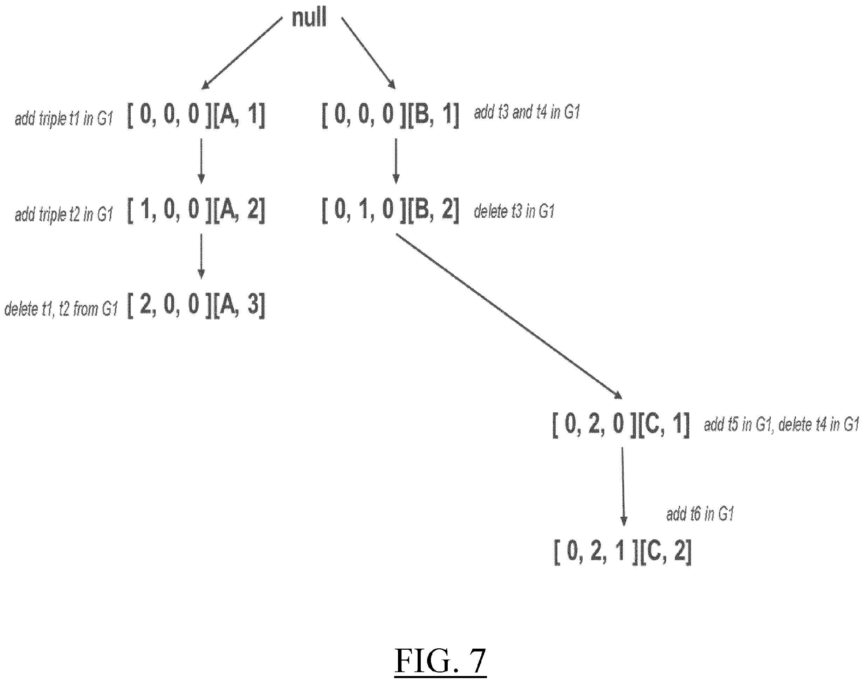

FIG. 7 shows an example of causal tree that may be built, according to the generating method, from the obtained log of one or more physical modifications in FIG. 6.

The generating method comprises obtaining the log of one or more physical modifications. The log of one or more physical modifications, that may be performed by each transaction, may be kept in a dedicated table along with the node executing a transaction, the unique identifier of the executed transaction, the vector timestamp of the executed transaction. An example of such a dedicated table is provided with reference to FIG. 6.

The generating method comprises building a causal tree representing causal relations among the obtained one or more physical modifications of the partially causal ordered log. The causal tree representing causal relations is drawn in FIG. 7. Each node of the causal tree represents one or more physical modifications of the partially causal ordered log. For example, the node labelled by the commit [0, 0, 0][A, 1] represents the physical modification "add triple t1 to G1", or the node labelled by [0, 2, 0][C, 1] represents the physical modifications "add triple t5 to G1, delete triple t4 in G1". The leaves of the causal tree in FIG. 7 are the terminal nodes [2, 0, 0][A, 3] and [0, 2, 1][C, 2].

The generating method comprises adding a convergent leaf relating one or more leaves of the causal tree. A convergent leaf is a child of (i.e., it descends from) the one or more leaves of the causal tree. In the example of FIG. 7, a convergent leaf may be a leaf descending from both the two leaves of the causal tree, i.e., [2, 0, 0][A, 3] and [0, 2, 1][C, 2].

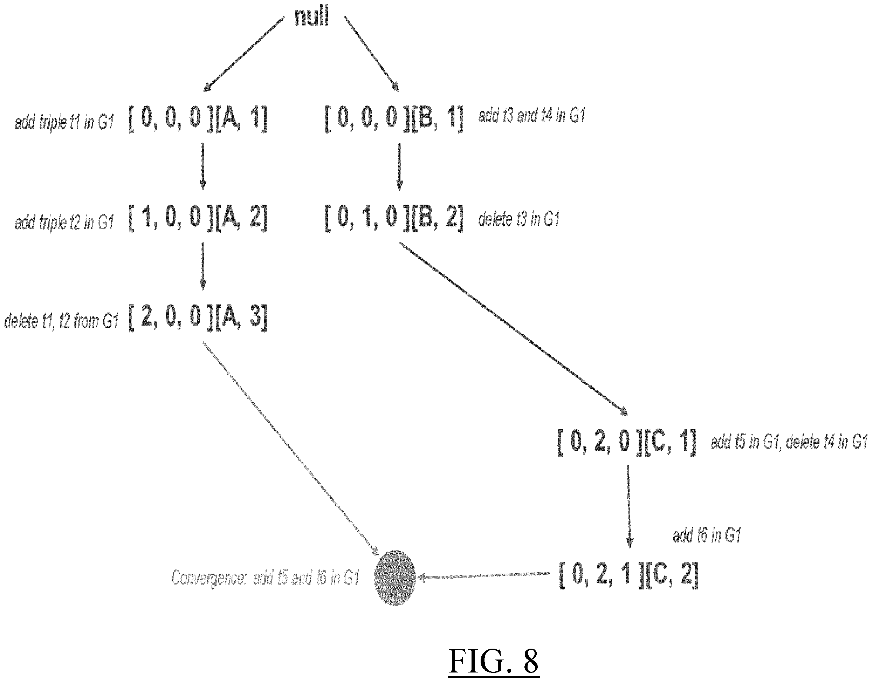

With reference to FIG. 8, it is shown the convergent leaf added by the generating method. The convergent leaf leads to a convergent physical modification, that in the example of FIG. 8 amounts to "add triple t5 and triple t6 in G1". The convergent physical modification is the physical modification resulting of the convergence of all paths in the causal tree.

The adding of a convergent leaf is now discussed.

The adding of a convergent leaf may comprise initializing a list of leaves of the causal tree and traversing each node of the causal tree. The traversing may be performed by a depth-first search algorithm or a breadth-first search algorithm. The traversing may be performed according to the following rules.

If the traversed node of the causal tree is a root of the causal tree, then the generating method may comprise initializing a list of physical modifications and adding the respective one or more physical modifications to the list of physical modifications. In the causal tree of FIG. 8, a root may be either [0, 0, 0][A, 1] or [0, 0, 0][B, 1]. The initializing may comprise deleting a current content of the list of physical modifications, i.e., deleting the list of previous physical modifications stored in said list. For example, starting from the root [0, 0, 0][B, 1], the list of physical modifications, after the optional initialization, may contain "add triple t3 and triple t4 in G1".

If the traversed node of the causal tree is not a leaf of the causal tree, then the generating method may comprise adding the respective one or more physical modifications to the list of physical modifications. For example, still with reference to FIG. 8, after the root [0, 0, 0][B, 1], the traversing may pass through [0, 1, 0][B, 2] and [0, 2, 0][C, 1] which are not leaves of the causal tree. Thus, the generating method may comprise adding the respective one or more physical modifications to the list of physical modifications. The up-to-date list of physical modifications may now contain "add triple t3 and triple t4 in G1" and "delete triple t3 from G1" and "add triple t5 in G1, delete triple t4 in G1".

If the traversed node of the causal tree is a leaf of the causal tree, then the generating method may comprise adding the respective one or more physical modifications to the list physical modifications and adding the traversed node of the causal tree to the list of leaves of the causal tree. For example, still with reference to FIG. 8, the traversing may arrive at the leaf [0, 2, 1][C, 2], which is a leaf of the causal tree. The generating method, then, may comprise adding the [0, 2, 1][C, 2] to the list of leaves of the causal tree and may comprise adding the respective one or more physical modifications to the list of physical modifications. Thus, the up-to-date list of physical modifications may now contain "add triple t3 and triple t4 in G1" and "delete triple t3 from G1", "add triple t5 in G1, delete triple t4 in G1" and "add triple t6 in G1".

Traversing the causal tree of FIG. 8 from the other root of the causal tree, namely the root [0, 0, 0][A, 1], the list of leaves of the causal tree may contain the leaf [2, 0, 0][A, 3] and the list of physical modifications may contain "add triple t1 in G1", "add triple t2 in G1" and "delete triple t1 and triple t2 in G1".

The generating method may comprise outputting the list of leaves of the causal tree. As the traversing of the casual tree may be performed root-wise (i.e., from each root of the causal tree), the outputted list of leaves may be a combination of one or more list of leaves, each generated from the respective traversing from each root. In the example of FIG. 8, the outputted list of leaves may contain [2, 0, 0][A, 3] and [0, 2, 1][C, 2], the first leaf obtained from traversing the casual tree starting from [0, 0, 0][A, 1] and the second leaf obtained from traversing the causal tree starting from [0, 0, 0][B, 1].

The generating method may comprise outputting the list of physical modifications. Optionally, the generating method may comprise compacting the outputted list of physical modifications. The compacting may comprise removing operations whose composition results in no modification. In the example of FIG. 8, the traversing from the root [0, 0, 0][A, 1] generates a list of physical modifications containing "add triple t1 in G1", "add triple t2 in G1" and "delete triple t1 and triple t2 in G1". After compacting, this list of physical modifications may be empty, because the operations of adding t1 and t2 in G1 are canceled out by the operations of deleting t1 and t2 in G1. Likewise, the traversing from the root [0, 0, 0][B, 1] generates a list of physical modifications containing "add triple t3 and triple t4 in G1" and "delete triple t3 from G1", "add triple t5 in G1, delete triple t4 in G1" and "add triple t6 in G1". After compacting, the compacted list of modifications may contain "add triple t5 and triple t6 in G1".

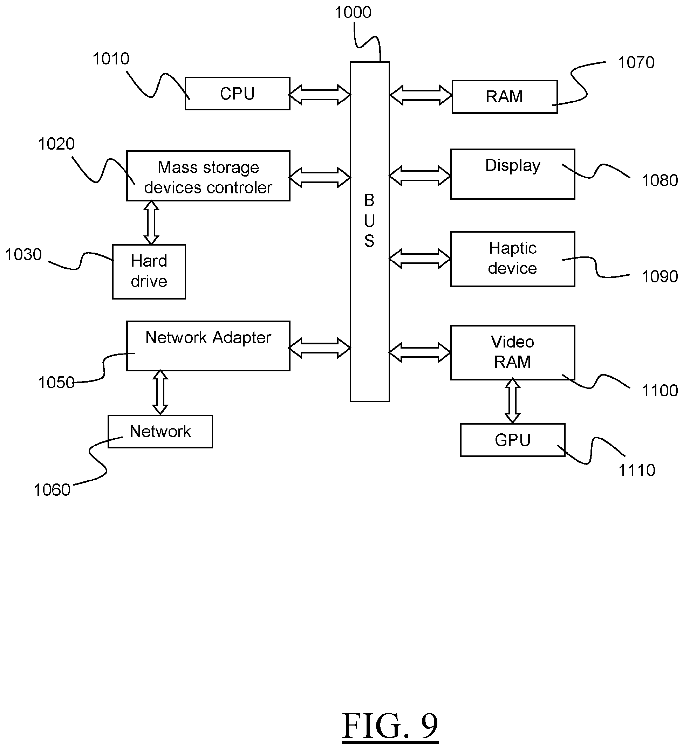

FIG. 9 shows an example of a system, wherein the system is a computer system, e.g. a workstation of a user, a server. The system can be used for building, maintaining, storing, using the data structure, and/or the system can be used for performing the methods of the present disclosure.

The computer system of the example comprises a central processing unit (CPU) 1010 connected to an internal communication BUS 1000, a random access memory (RAM) 1070 also connected to the BUS. The computer system is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The computer system may also include a haptic device 1090 such as cursor control device, a keyboard or the like. A cursor control device is used in the computer system to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the computer system may comprise a sensitive pad, and/or a sensitive screen.

The computer program may comprise instructions executable by a computer, the instructions comprising means for causing the above system to perform any or all of the methods (the generating method and/or the capturing method) of the present disclosure. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Methods steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for capturing data changes in a distributed multi-master ACID database with consistent read isolation and eventual consistency, the database comprising nodes for executing transactions, each node maintaining a respective logical clock for generating a logical timestamp for each executed transaction, the method comprising:
- obtaining the database, the database comprising a data structure for storing the captured data changes; and
- for each transaction executed by a node, and prior a commit of the executed transaction, logging one or more captured data changes, each captured data change comprising a logical timestamp of the executed transaction and one or more physical modifications, thereby storing in the data structure a partially causal ordered log of the one or more physical modifications of the executed transactions.

2. The method of claim 1, wherein the generated logical timestamp for each executed transaction provides a partial causal order of the executed transactions.

3. The method of claim 1 or 2, wherein the generated logical timestamp for each executed transaction comprises:
- an unique identifier of the executed transaction, the unique identifier (i) indicating on which node of the database the transaction was executed and (ii) counting how many transactions already executed on that node including the executed transaction; and
- a vector timestamp of the executed transaction expressing a casual relation of the executed transaction from transactions executed by the nodes of the database, the vector timestamp having a component for each respective node of the database, each component counting how many transactions already executed on the respective node being causally related to the executed transaction.

4. The method of claim 3, wherein the counting increments at each transaction being executed.

5. The method of any one of claims 1 to 4, wherein the one or more physical modifications comprise deterministic and not contextual operations.

6. The method of claim 5, wherein the database is an RDF graph database for storing RDF data, the deterministic and not contextual operations on a RDF data comprise adding and/or deleting RDF triples, respectively, to/from an RDF graph.

7. The method of claim 5, wherein the database is a relational database, the deterministic and not contextual operations on the relational database comprise adding and/or deleting rows, respectively, to/from a table.

8. A computer-implemented method for generating captured data changes according to any one of claims 1 to 7, the method comprising:
- obtaining the log of one or more physical modifications;
- building a causal tree representing causal relations among the obtained one or more physical modifications of the partially causal ordered log, each node of the causal tree representing one or more physical modifications of the partially causal ordered log; and
- adding a convergent leaf relating one or more leaves of the causal tree, a convergent leaf being a child of the one or more leaves of the causal tree which leads to convergent physical modifications, the convergent physical modification being the physical modification resulting of the convergence of all paths in the causal tree.

9. The method of claim 8, wherein adding a convergent leaf further comprises:
- initializing a list of leaves of the causal tree;
- traversing each node of the causal tree according to the following rules:
-- if the traversed node of the causal tree is a root of the causal tree, initializing a list of physical modifications and adding the respective one or more physical modifications to the list of physical modifications;
-- if the traversed node of the causal tree is not a leaf of the causal tree, adding the respective one or more physical modifications to the list of physical modifications;
-- if the traversed node of the causal tree is a leaf of the causal tree, adding the respective one or more physical modifications to the list physical modifications and adding the node of the causal tree to the list of leaves of the causal tree;
- outputting the list of leaves of the causal tree; and
- outputting the list of physical modifications.

10. The method of claim 9, further comprising compacting the outputted list of physical modifications, wherein compacting comprises removing operations whose composition results in no modification.

11. A computer program comprising instructions which, when performed by a computer system, cause the computer system to perform the method according to any one of claims 1 to 7 and/or the method according to any one of claims 8 to 10.

12. A computer readable storage medium having recorded thereon the computer program of claim 11.

13. A system comprising a processor coupled to a memory, the memory having recorded thereon the computer program of claim 11.
